# EUROPEAN PATENT SPECIFICATION

(11) **EP 4 036 752 B1**
(45) Date of publication and mention of the grant of the patent: **09.10.2024**
(21) Application number: 21154372.3
(22) Date of filing: 29.01.2021
(51) Int. Cl.: G06F 16/2455, G06F 16/2457

(54) **METHOD FOR ANALYSING PROCESS DATA RELATED TO A SEGMENT OF A PRODUCTION PROCESS**
VERFAHREN ZUR ANALYSE VON PROZESSDATEN IN BEZUG AUF EIN SEGMENT EINES PRODUKTIONSPROZESSES
PROCÉDÉ D'ANALYSE DE DONNÉES DE PROCESSUS RELATIVES À UN SEGMENT D'UN PROCESSUS DE PRODUCTION

(43) Date of publication of application: 03.08.2022
(73) Proprietor: ABB Schweiz AG, 5400 Baden (CH)
(72) Inventor: HOLLENDER, Martin, 69221 Dossenheim (DE); SCHMIDT, Benedikt, 69117 Heidelberg (DE); TAN, Ruomu, 68163 Mannheim (DE); XU, Chaojun, 69469 Weinheim (DE); VOLKMANN, Lara-Marie, 69168 Wiesloch (DE)
(74) Representative: Maiwald GmbH

(56) References cited:
- EP-A1- 3 258 395
- US-A1- 2017 277 521
- US-B1- 10 853 372

## Description

### Background

In process industry, production processes are composed of operations for the processing of raw materials, like mixing, heating etc. Batch processes organize the production processes into batches and are typically specified in terms of a recipe, which documents steps of an execution of operations using the plant equipment. A batch can include several batch phases based on the sequence of operations.

The production processes are typically monitored using industrial sensors which determine process characteristics like pressure or flow.

An efficient production of a target product with a certain quality is important. In case that quality goals are not met or undesirable events occur, an analysis of the production process is challenging. Identification of similar segments of the production process from the past can provide insights into any process deviation and its root cause by comparison of related sensor data. EP3258395A1 deals with a system for processing data streams including key information uniquely given to sensor data.

### Detailed description of the invention

The invention is defined by the features of the independent claims. Further embodiments are the subject-matter of the dependent claims. Similarity search is an important technique for analysing production process deviations, e.g. for analysing quality issues or unwanted behaviour like unexpected high pressures or unreached target flow rates. Time series data sequences generated by industrial sensors can document such situations. Typically, a plurality of industrial sensors are available for characterising the processes and they determine a multitude of process variables, resulting in multivariate time series. Therefore, similarity search can mean to identify a characteristic process data sequence within a univariate or multivariate set of data related to the processes and to compare at least the characteristic process data sequence with other process data sequences.

Different approaches can be applied to obtain similar process data sequences in long time series trajectories of process data, as e.g. windowing. A problem of such approaches is the amount of data to be searched and reducing this amount of data by manual selection of time ranges to be searched might be tedious or exclude relevant segments.

Accordingly, the present invention is directed to a method for analysing process data related to a segment of a production process, a method for generating a control signal and/or a warning signal, an analysis device, a use of a similarity value for labelling, a computer program, and a computer-readable storage medium with subject matter as described in the independent claims. Advantageous modifications of the invention are stated in the dependent claims. All combinations of at least two of the features disclosed in the description, the claims, and the figures fall within the scope of the invention. In order to avoid repetition, features disclosed in accordance with the method shall also apply and be claimable in accordance with mentioned systems.

In this entire description of the invention, the sequence of procedural steps is presented in such a way that the process is easily comprehensible. However, the skilled person will recognize that many of the process steps can also be executed in a different order and lead to the same or a corresponding result. In this sense, the sequence of the process steps can be changed accordingly. Some features are provided with counting words to improve readability or to make the assignment more clear, but this does not imply the presence of certain features.

To achieve these and other advantages and in accordance with the purpose of the invention, as embodied and broadly described herein, there is provided a method for analysing process data related to a segment of a production process including the following steps. In a first step a process data sequence of the segment of the production process is provided, which exhibits a data pattern of at least one process variable to be analysed. In a further step a set of metadata of the segment of the production process related to the provided process data sequence is provided. In a further step process data sequences are, based on the provided set of metadata of the segment of the production process, determined, which are stored in a first database. In a further step a start timestamp and end timestamp of each of the determined process data sequence are determined, based on the first database. In a further step a similarity value for each of the determined process data sequences compared to the provided process data sequence is calculated, which is based on the data pattern of the at least one process variable, and wherein the determined process data sequences for the calculation are provided, based on the related start timestamps and end timestamps, by accessing a second database comprising the process data sequences, for analysing the process data.

Advantageously the method provides a smart segmentation of a huge amount of process data to reduce a search space by using metadata of a segment of the production process, like e.g. batch events, for searching similar data patterns. This batch events can be provided, e.g., by a batch automation system, based on heuristics and/or based on calculations using algorithms. The size of the set of the metadata, that means the amount of variables included in the set of the metadata can be adapted to the depth of analysis of the process data and/or an available time span for analysis, resulting in a different reduction of the amount of data to be processed for the analysis of the process data.

The set of metadata can include batch production process related data, including a start time and an end time of phases of the batch process. Additionally or alternatively, the set of metadata include all data related to a production process, by this allowing to improve the characterization of the analysis - this can include e.g., season, e.g., summer/winter, information, weather information, e.g., external humidity, or relationships between productions, e.g., related productions on different production lines. As a result an adapted set of metadata can be utilized to reduce the search space by providing exclusion criteria when selecting data segments as candidates for the similarity search.

A segment of the production process can be understood as a time interval of a batch production process, which is selected for analysis when comparing different batch runs, e.g. a specific operation or phase.

An operation can be a procedural element defining an independent processing task to accomplish all or part of a process operation, typically specifying the initiation, organization, and control of phases.

Additionally or alternatively the set of metadata can include a material and/or a recipe and/or a phase of the production process to reduce the search space and to improve the quality of the search result. An operator using the method advantageously can have quicker access to search results that are more relevant.

The method can be integrated with various operation scenarios, as e.g. with model building and/or exploration via labelling of batches and/or monitoring via online retrieval of the process data.

By using the set of metadata for determining process data sequences, which can be relevant to identify a specific data pattern within a single or multivariate time series of process data, similar segments in the historical process data can be retrieved, to reduce the search space by a metadata-enriched search process. Advantageously using the provided method increases the quality of search results including relevant process data sequences by incorporating metadata into the search process, because the calculated similarity value can be more precise, e.g. because irrelevant sequences with a high similarity but belonging e.g. to the production of a different product, are excluded.

That means using the method an operator can select a process data sequence of a trajectory of a process variable or of multiple trajectories of multiple process variables of interest and request a search for similar process data sequences in a database storing historical process data. For instance, the method will retrieve process data of processes of related batches and/or operations and/or segments and will focus the search for similar data pattern limited on these reduced number of process data. This method can heavily reduce the search time and increases the quality of results , as users typically are interested in similar plant situations. Wherein a quality of the search can be measured by a ratio of relevant to irrelevant search results and/or the ratio of found results to all existing results. In a further step the method can include sorting the determined process data sequences in respect to the calculated similarity value and additional or alternative a similarity value limit can be defined to generate a multitude of determined process data sequences with a similarity value above the similarity value limit. This adjustment of the search sensibility enables an operator to adapt the search sensibility by using ranges to specify what shall be considered as a similar pattern.

According to an aspect, the first database and the second database are an identical database.

That means the database is identical, but the metadata are not directly associated or linked to the process data. The metadata and the process data can be linked by the start timestamp and the end timestamp, which are linked to the metadata and the process data.

According to an aspect, a plurality of the determined process data sequences with a selected similarity value interval is visually displayed for providing a new process data sequence to be analysed according to the preceding claim.

This enables an easy access to the data and to an easy adaption to specific needs for analysing the process data.

According to an aspect, the metadata includes a batch process and/or batch process interval and/or product type and/or an operation type and/or a phase of an operation and/or a production recipe and/or a process variable.

By using a specific set of metadata analysing the process data can be adapted to specific needs in respect to segments of a production process to be analysed and preferably adapted to an amount of process data available from the second database.

According to an aspect, the determination of the process data sequences is based on a subset of the provided set of metadata of the segment of the production process, which are stored in a first database.

Advantageously by a subset of metadata such segments of the production process can be chosen for the analysis, which belong to the same product as of the production when the process data sequence exhibiting the data pattern to be analysed was processed. Furthermore, the method for analysing process data allows to incorporate and/or take into account additional metadata to reduce the search space. This includes labels, search history, characteristic trajectories, etc. Alternatively the set of metadata can be chosen identical to the metadata of the production process generating the provided process data sequence exhibiting the data pattern to be analyzed.

The method for analysing process data can be extended by parameterizing the search approach such that a new search can be adjusted by an operator, by considering alternative metadata or by labelling retrieved similar batches.

Alternatively or additionally, detection of characteristic data patterns and/or of previously queried data patterns of the provided process data sequence can be automated and performed by querying for these data pattern.

Alternatively or additionally, this automated detection of characteristic data patterns can be applied to process data, which are online available, characterising actually running batches of production processes, for online an analysis of process data.

According to an aspect, a user interface provides access to the set of metadata and related process variables for defining the subset of the metadata.

According to an aspect, the similarity value is calculated for a sub interval of each of the determined process data sequences.

Using other words the method for analysing process data can be adjusted to focus on a specific set of metadata, as e.g. a specific batch process, or on an time interval selected from a process data sequence, using a windowing approach.

According to an aspect, the sub interval of each of the determined process data sequences can be determined using shapelets and/or heuristics and/or change point detection, for analyzing process data and/or to reduce an amount of process data sequences calculating the similarity.

Preferably the sub interval can be determined if metadata including batch information is not available.

More preferably, the sub interval is determined, if a segment of the process defined by the metadata is still rather large and contains data sequences, which are of interest for the similarity search. To exclude these part of data sequences, an operator can select a data sequence of interest and the method will start a search process for more detailed metadata, which include the data sequence of interest. The method for analysing process data related to a segment of a production process can then be started again with subset of metadata including the more detailed metadata.

Advantageously, defining such a sub interval of data sequences to be analyzed increases the amount of relevant data sequences to be analyzed to improve a result of the analysis.

According to an aspect, a time span of the sub interval of each of the determined process data sequences is constant.

If, for instance, a specific process step of the segment of the production process should be analyzed, calculating the similarity value can be further accelerated if only a specific sub interval is taken into account.

Such a sub interval can be selected by an operator to restrict the data sequences for calculating the similarity value. Such a selection can be a restriction to a sub interval closing, e.g. the last 30% of the processing time of an operation A.

According to an aspect, characteristic shapes of the determined process data sequences are determined to define the sub interval for each of the determined process data sequences.

Advantageously, such characteristic shapes or data patterns to be analyzed can be automatically detected and used for the calculation of a similarity value. Such automatically detected data patterns can be automatically proposed to an operator for confirming. Such data patterns to be analyzed can be detected using shapelet methods and/or change point detection methods. Advantageously this provides a method to overcome a problem if the first database does not include a required start timestamp and/or an timestamp for providing the determined process data sequences from the second database.

If a characteristic shape or an characteristic point of the provided determined process data sequence is used, a timespan of a resulting sub interval can change from one provided determined process data sequence to another sequence. The characteristic shape or data pattern to be analyzed can be preselected, preferably in respect to relevance.

According to an aspect, the similarity value is calculated based on euclidean distance calculation and/or based on a dynamic time warping (DTW) of the process data sequences concerned.

A dynamic time warping (DTW) can be defined as a method that calculates an optimal match between two given temporal sequences, e.g. time series, with certain restriction and rules to measuring similarity between two temporal sequences.

The term similarity can be defined on the basis of distance on transformations, e.g. Symbolic Aggregate Approximation or metrics related to a mapping of the time series.

According to an aspect, the calculation of the similarity value includes a multivariate analysis of a plurality of process data sequences.

Advantageously by using a multivariate analysis more complicated processing issues can be analyzed.

A method is proposed, wherein, based on a similarity value calculated according to any of methods described above, a control signal for controlling a production process is provided; and/or based on the similarity value, a warning signal for warning operators of the production process is provided.

Advantageously, specific data patterns of process data sequence can identify process issues, which can be detected by this method right away, which can be able to be resolved.

An analysis device is proposed, preferably including a computer for calculating the similarity value, which is configured to perform any of the above described methods. These analysis device can be a support system, which includes a first database and a second database and/or a computer and/or a user interface, wherein the system is configured to analyse process data.

A use of the similarity value of the determined process data sequences for labelling a batch process is proposed, whose production process caused a process data sequence comprising a similarity value within a defined similarity value interval.

According to another aspect a computer program is disclosed comprising instructions, which, when the program is executed by a computer, cause the computer to carry out any of the described methods above.

Such a computer program enables the use of the described method in different systems.

According to another aspect of the present invention a computer-readable storage medium is disclosed on which the computer program is stored.

### Brief description of the drawings

The accompanying drawings, which are included to provide a further understanding of the invention and are incorporated in and constitute a part of this application, illustrate embodiments of the invention and together with the description serve to explain the principle of the invention. The drawings display:
- FIG. 1: two process data sequences including two different variables of a segment of a production process ;
- FIG. 2: process data sequences including two different variables of the segment of a production process featuring similarity; and

- FIG. 3: a flow diagram of a method for analyzing process data.

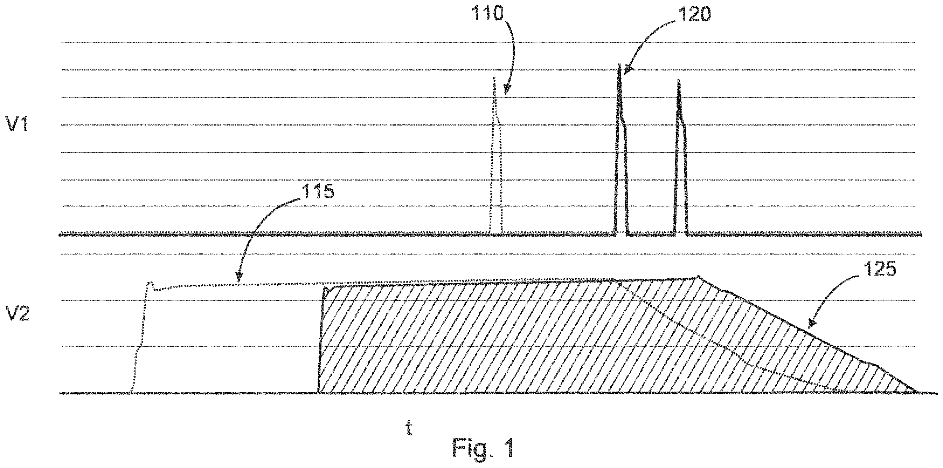

Figure 1 shows a diagram with a plot of first process data sequence including a first process variable V1 110 and a second process variable V2 115 of a segment of a production process exhibiting a data pattern 110, 115 of a regular process including a single peak, which can be shown to an operator on an output of an analysis device, as e.g. a screen.

This first process data sequence can be compared with a plot of the first process variable V1 and the second process variable V2 of a provided second process data sequence 120 including a data pattern showing two peaks, as for instance resulting from a faulty production process.

As an example the process variable V1 can be a flow of a component of a process and V2 can be a level of a fluid within a vessel. An operator may be interested to analyse how often such data pattern of the provided second process data sequence 120 are included in process data of the past. For closer analysis the second process parameter V2 for the first process data sequence 115 and the second process data sequence 125 are also plotted within the diagram for comparison, wherein the second process parameters V2 115 and 125 are at least timely related to the corresponding process parameters V1 110, 120. Using such a diagram can provide a selection of a process data sequence exhibiting a data pattern to be analysed to provide this process data sequence for calculating a similarity value according to the method for analysing process data. By providing a set of metadata, which is related to this selected and provided process data sequence for analysis, corresponding historic process data sequences stored in a first database can be determined.

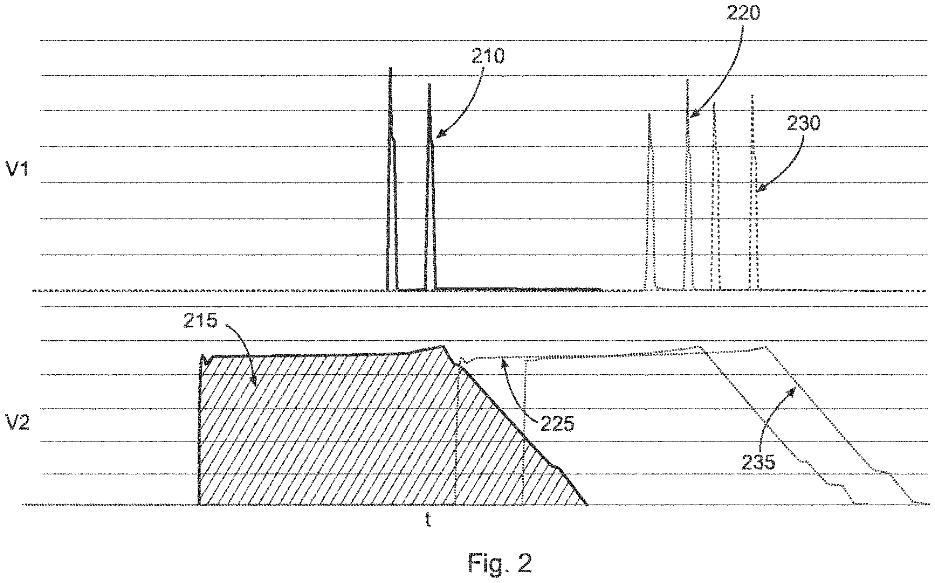

Figure 2 shows a diagram with a plot of the first process parameter V1 210 and the second process parameter V2 215 of a provided first process data sequence exhibiting the data pattern to be analysed including two peaks.

Included within the diagram are plots of two determine process data sequences for the first process parameter V1 220, 230 and the second parameter V2 225, 235, which can comprise a similarity value, which is higher than a defined similarity value limit for analysis of the process data. The method as described can provide similarity values corresponding to the two determine process data sequence 210, 220 at an analysis device using an output device, as for instance a screen, and sort the determined process data sequences in accordance to a similarity as calculated by the similarity value.

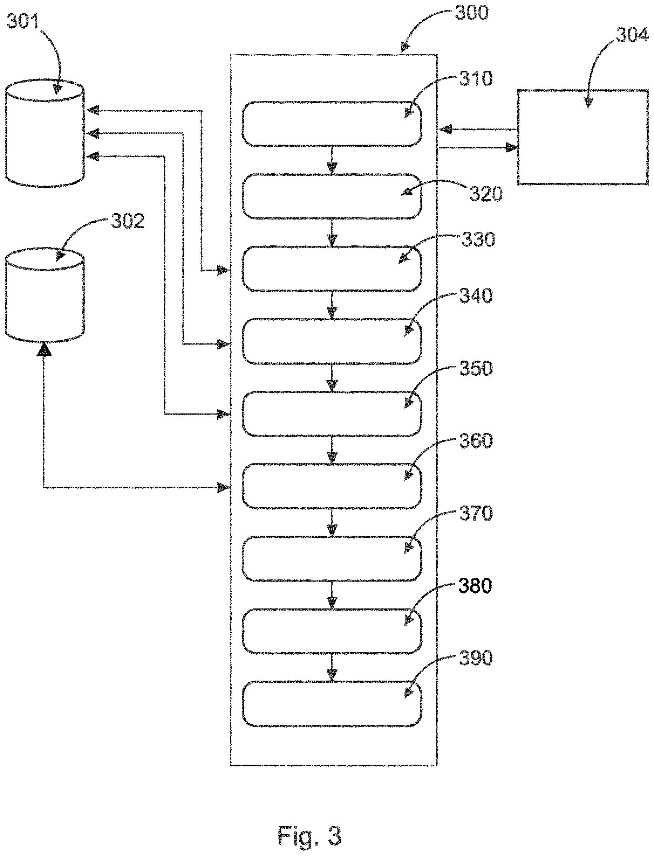

Figure 3 sketches a flow diagram of a method 300 for analyzing process data related to a segment of a production process.

At step 310 a process data sequence of the segment of the production process exhibiting a data pattern of at least one process variable to be analysed is provided, e.g. by a user interface 304, which is configured to plot process data. This provision of a process data sequence exhibiting the data pattern to be analysed can be performed using a graphical user interface, which provides access to process data of batches of production processes including related process variables. An operator can explore the process variables plotted at the graphical user interface for different batch runs and respective phases of the batches. In particular, the user can examine and/or select a batch with quality problem or undesirable events, which can be shown by the process data.

At step 320 a set of metadata of the segment of the production process related to the provided process data sequence including the data pattern for analyse is provided.

An operator can provide the set of metadata by using a graphical user interface, as e.g. of an analysis device, which can be configured to provide a full set of media data of the process data sequence exhibiting the data pattern to be analysed, as e.g. batch metadata and/or a production material and/or a production recipe and/or a start timestamp and/or an end timestamp of the related batches and/or a start timestamp and/or an end timestamp of the related operations. Alternatively or additionally the method can include and/or the analyse device can be configured to select a sub interval of the visualised provided process data sequences including the data pattern to be analysed for calculating the similarity value.

At step 330 process data sequences based on the provided set of metadata of the segment of the production process, which are stored in a first database 301 are determined, e.g. by accessing the first database to search for the related process data sequences.

That means, using the set of metadata candidates of similar batch runs, i.e. the batch runs of the past with similar metadata to the selected batch, are retrieved from the first database 301, which includes historical batch runs and their metadata. Meta data can include operation data that record the recipe used in the batches.

At step 340 a start timestamp and end timestamp of each of the determined process data sequence are determined, based on the first database 301. Since it is assumed that batches with similar batch metadata should have similar phases, each batch run candidate is expected to have one segment belonging to the batch phase represented by the selected segment. E.g. the user selected two temperature variables, T1 and T2, in the operation "reactor1" for material A, only other T1, T2 temperatures for "reactor1" operations of material A are considered in this process.

Optionally, at step 350 available process variables and/or names of the process variables are determined based on data stored in the first database.

At step 360, the determined process data sequences for analysing the process data are provided, based on the determined start timestamps and end timestamps, which are related to the determined process data sequences, by accessing a second database 300 comprising the process data sequences.

Optionally, at step 370 the set of metadata is adapted to increase or decrease the number of determined process data sequences.

Optionally, at step 380 a methodology for calculating the similarity value is chosen and/or modified, based on at least an analysis of a provided determined process data sequence.

At step 390 a similarity value for each of the provided determined process data sequences is calculated by comparing the provided determined process data sequences including the data pattern to be analysed with the provided determined process data sequences of the second database 300, based on the data pattern of the at least one process variable.

Using other words, the similarity value is calculated for the provided determined process data sequences of the second database 301 selected by the set of metadata, as e.g. batch runs. If the calculation of the similarity value is chosen to include an overall time range of a batch, the similarity search is applied to this complete operation. If a more focused selection is performed, only a selected part of process data of a segment of a production process is used, according to a windowing approach. The calculation of the similarity value related to batch production process quantifies by calculating a similarity value for each of the provided determined process data sequences, by calculating how similar the provided determined process data sequences are to the provided process data sequence exhibiting the data pattern to be analysed, which can be selected by an operator. Using this method and sorting the provided determined process data sequences in respect to the similarity value and operator is able to retrieve process data sequences, which are relevant for further analysis of the production process.

The method for analysing process data can be extended by parameterizing the search approach such that a new search can be adjusted by an operator, by considering alternative metadata or by labelling retrieved similar batches. Alternatively, detection of characteristic data patterns and/or of previously queried data patterns of the provided process data sequence can be automated and performed by querying for these data pattern.

This automated detection of characteristic data patterns can be applied to process data, which are online available, characterising actually running batches of production processes, for online an analysis of process data.

## Claims

1. A method (300) for analysing process data related to a segment of a production process;
providing a process data sequence of the segment of the production process exhibiting a data pattern of at least one process variable to be analysed (310);
providing a set of metadata of the segment of the production process related to the provided process data sequence (320), wherein the metadata include data related to a batch production process;
determining process data sequences based on the provided set of metadata of the segment of the production process (330), wherein the metadata are stored in a first database;
determining a start timestamp and end timestamp of each of the determined process data sequence (340), based on the first database (301); and
calculating a similarity value of a sub interval of each of the determined process data sequences compared to the provided process data sequence (390), based on the data pattern of the at least one process variable,
wherein characteristic shapes of the determined process data sequences are determined to define the sub interval for each of the determined process data sequences, and
wherein the determined process data sequences for the calculation are provided, based on the related start timestamps and end timestamps, by accessing a second database (302) comprising the process data sequences, for analysing the process data to select a batch with a quality problem or an undesirable event.

2. The method (300) according to any of the preceding claims, wherein a plurality of the determined process data sequences with a selected similarity value interval is visually displayed for providing a new process data sequence to be analysed according to the preceding claim.

3. The method (300) according to any of the preceding claims, wherein the metadata includes a batch process and/or batch process interval and/or product type and/or an operation type and/or a phase of an operation and/or a production recipe and/or a process variable.

4. The method (300) according to any of the preceding claims, wherein the determination of the process data sequences is based on a subset of the provided set of metadata of the segment of the production process, which are stored in the first database (301).

5. The method (300) according to claim 4, wherein a user interface (304) provides access to the set of metadata and related process variables for defining the subset of the metadata.

6. The method (300) according to any of the preceding claims, wherein a time span of the sub interval of each of the determined process data sequences is constant.

7. The method (300) according to any of the preceding claims, wherein the similarity value is calculated based on euclidean distance calculation and/or based on dynamic time warping DTW of the process data sequences concerned.

8. The method (300) according to any of the preceding claims, wherein the calculation of the similarity value includes a multivariate analysis of a plurality of process data sequences.

9. A method, wherein, based on a similarity value calculated according to one of the preceding claims, a control signal for controlling a production process is provided; and/or based on the similarity value, a warning signal for warning operators of the production process is provided.

10. An analysis device, including a computer for calculating a similarity value, configured to perform a method according to any of the preceding claims.

11. A use of a similarity value according to claim 1 of the determined process data sequences for labelling a batch process, whose production process caused a process data sequence comprising a similarity value within a defined similarity value interval to select a batch with a quality problem or an undesirable event.

12. A computer program comprising instructions, which, when the program is executed by a computer, cause the computer to carry out a method according to claims 1 to 9.

13. A computer-readable storage medium for storing the computer program according to claim 12.

## Patentansprüche

1. Verfahren (300) zur Analyse von Prozessdaten, die sich auf ein Segment eines Produktionsprozesses beziehen;
Bereitstellen einer Prozessdatensequenz des Segments des Produktionsprozesses, die ein Datenmuster von mindestens einer zu analysierenden Prozessvariablen aufweist (310);
Bereitstellen eines Satzes von Metadaten des Segments des Produktionsprozesses in Bezug auf die bereitgestellte Prozessdatensequenz (320), wobei die Metadaten Daten in Bezug auf einen Batch-Produktionsprozess umfassen;
Bestimmen von Prozessdatensequenzen basierend auf dem bereitgestellten Satz von Metadaten des Segments des Produktionsprozesses (330), wobei die Metadaten in einer ersten Datenbank gespeichert sind;
Bestimmen eines Start-Zeitstempels und eines End-Zeitstempels von jeder der bestimmten Prozessdatensequenz (340), basierend auf der ersten Datenbank (301); und
Berechnen eines Ähnlichkeitswerts eines Teilintervalls jeder der bestimmten Prozessdatensequenzen im Vergleich zu der bereitgestellten Prozessdatensequenz (390), basierend auf dem Datenmuster der mindestens einen Prozessvariablen,
wobei charakteristische Formen der bestimmten Prozessdatensequenzen bestimmt werden, um das Teilintervall für jede der bestimmten Prozessdatensequenzen zu definieren, und
wobei die ermittelten Prozessdatensequenzen für die Berechnung basierend auf den zugehörigen Start-Zeitstempeln und End-Zeitstempeln durch Zugriff auf eine zweite Datenbank (302), die die Prozessdatensequenzen enthält, zur Analyse der Prozessdaten bereitgestellt werden, um eine Charge mit einem Qualitätsproblem oder einem unerwünschten Ereignis auszuwählen.

2. Verfahren (300) gemäß einem der vorhergehenden Ansprüche, wobei eine Vielzahl der bestimmten Prozessdatensequenzen mit einem ausgewählten Ähnlichkeitswert-Intervall visuell angezeigt wird, um eine neue Prozessdatensequenz bereitzustellen, die gemäß dem vorhergehenden Anspruch zu analysieren ist.

3. Verfahren (300) gemäß einem der vorangehenden Ansprüche, wobei die Metadaten einen Batch-Prozess und/oder ein Batch-Prozess-Intervall und/oder einen Produkttyp und/oder einen Operationstyp und/oder eine Phase einer Operation und/oder ein Produktionsrezept und/oder eine Prozessvariable umfassen.

4. Verfahren (300) gemäß einem der vorangehenden Ansprüche, wobei die Bestimmung der Prozessdatensequenzen auf einer Teilmenge des bereitgestellten Satzes von Metadaten des Segments des Produktionsprozesses basiert, die in der ersten Datenbank (301) gespeichert sind.

5. Verfahren (300) gemäß Anspruch 4, wobei eine Benutzerschnittstelle (304) Zugriff auf den Satz von Metadaten und zugehörigen Prozessvariablen zum Definieren der Teilmenge der Metadaten bietet.

6. Das Verfahren (300) gemäß einem der vorhergehenden Ansprüche, wobei eine Zeitspanne des Teilintervalls jeder der bestimmten Prozessdatensequenzen konstant ist.

7. Verfahren (300) gemäß einem der vorhergehenden Ansprüche, wobei der Ähnlichkeitswert auf der Grundlage einer euklidischen Abstandsberechnung und/oder auf der Grundlage eines Dynamic Time Warping DTW der betreffenden Prozessdatensequenzen berechnet wird.

8. Verfahren (300) gemäß einem der vorangehenden Ansprüche, wobei die Berechnung des Ähnlichkeitswerts eine multivariate Analyse einer Vielzahl von Prozessdatensequenzen umfasst.

9. Verfahren, bei dem gemäß einem nach einem der vorhergehenden Ansprüche berechneten Ähnlichkeitswert ein Steuersignal zur Steuerung eines Produktionsprozesses bereitgestellt wird; und/oder auf der Grundlage des Ähnlichkeitswertes ein Warnsignal zur Warnung von Bedienern des Produktionsprozesses bereitgestellt wird.

10. Analysevorrichtung, vorzugsweise umfassend einen Computer zur Berechnung eines Ähnlichkeitswerts, konfiguriert zur Durchführung eines Verfahrens gemäß einem der vorangehenden Ansprüche.

11. Verwendung eines Ähnlichkeitswerts gemäß Anspruch 1 der ermittelten Prozessdatensequenzen zur Kennzeichnung eines Batch-Prozesses, dessen Produktionsprozess eine Prozessdatensequenz mit einem Ähnlichkeitswert innerhalb eines definierten Ähnlichkeitswert-Intervalls verursacht hat, um eine Charge mit einem Qualitätsproblem oder einem unerwünschten Ereignis auszuwählen.

12. Computerprogramm mit Befehlen, die bei Ausführung des Programms durch einen Computer diesen veranlassen, ein Verfahren gemäß einem der Ansprüche 1 bis 9 auszuführen.

13. Ein computerlesbares Speichermedium zum Speichern des Computerprogramms gemäß Anspruch 12.

## Revendications

1. Procédé (300) d'analyse de données de processus relatives à un segment d'un processus de production ;
fourniture d'une séquence de données de processus du segment du processus de production présentant un motif de données d'au moins une variable de processus à analyser (310) ;
fourniture d'un ensemble de métadonnées du segment du processus de production relatives à la séquence de données de processus fournie (320), les métadonnées incluant des données relatives à un processus de production par lot ;
détermination de séquences de données de processus sur la base de l'ensemble fourni de métadonnées du segment du processus de production (330), les métadonnées étant stockées dans une première base de données ; détermination d'un horodatage de début et d'un horodatage de fin de chaque séquence de données de processus déterminée (340), sur la base de la première base de données (301) ; et
calcul d'une valeur de similitude d'un sous-intervalle de chacune des séquences de données de processus déterminées par comparaison à la séquence de données de processus fournie (390), sur la base du motif de données de l'au moins une variable de processus,
des formes caractéristiques des séquences de données de processus déterminées étant déterminées pour définir le sous-intervalle pour chacune des séquences de données de processus déterminées, et
les séquences de données de processus déterminées pour le calcul étant fournies, sur la base des horodatages de début et horodatages de fin associés, par accès à une deuxième base de données (302) comprenant les séquences de données de processus, pour l'analyse des données de processus afin de sélectionner un lot ayant un problème de qualité ou un événement indésirable.

2. Procédé (300) selon l'une quelconque des revendications précédentes, dans lequel une pluralité des séquences de données de processus déterminées ayant un intervalle de valeur de similitude sélectionné est affichée visuellement pour fournir une nouvelle séquence de données de processus à analyser selon la revendication précédente.

3. Procédé (300) selon l'une quelconque des revendications précédentes, dans lequel les métadonnées incluent un processus de lot et/ou un intervalle de processus de lot et/ou un type de produit et/ou un type d'opération et/ou une phase d'une opération et/ou une recette de production et/ou une variable de processus.

4. Procédé (300) selon l'une quelconque des revendications précédentes, dans lequel la détermination des séquences de données de processus est basée sur un sous-ensemble de l'ensemble fourni de métadonnées du segment du processus de production, qui est stocké dans la première base de données (301).

5. Procédé (300) selon la revendication 4, dans lequel une interface utilisateur (304) fournit un accès à l'ensemble de métadonnées et de variables de processus associées pour la définition du sous-ensemble des métadonnées.

6. Procédé (300) selon l'une quelconque des revendications précédentes, dans lequel une durée du sous-intervalle de chacune des séquences de données de processus déterminées est constante.

7. Procédé (300) selon l'une quelconque des revendications précédentes, dans lequel la valeur de similitude est calculée sur la base d'un calcul de distance euclidienne et/ou sur la base de la déformation temporelle dynamique DTW des séquences de données de processus concernées.

8. Procédé (300) selon l'une quelconque des revendications précédentes, dans lequel le calcul de la valeur de similitude inclut une analyse multivariée d'une pluralité de séquences de données de processus.

9. Procédé dans lequel, sur la base d'une valeur de similitude calculées selon l'une des revendications précédentes, il est fourni un signal de commande commandant un processus de production ; et/ou sur la base de la valeur de similitude, il est fourni un signal d'avertissement pour avertir les opérateurs du processus de production.

10. Dispositif d'analyse, incluant un ordinateur pour calculer une valeur de similitude, configurée pour exécuter un procédé selon l'une quelconque des revendications précédentes.

11. Utilisation d'une valeur de similitude selon la revendication 1 des séquences de données de processus déterminées pour l'étiquetage d'un processus de lot, dont le processus de production a provoqué une séquence de données de processus comprenant une valeur de similitude dans un intervalle de valeurs de similitude défini, afin de sélectionner un lot ayant un problème de qualité ou un événement indésirable.

12. Programme informatique comprenant des instructions, qui, lorsque le programme est exécuté par un ordinateur, amènent l'ordinateur à mettre en œuvre un procédé selon l'une quelconque des revendications 1 à 9.

13. Support de stockage lisible par ordinateur pour stocker le programme informatique selon la revendication 12.
